# EUROPÄISCHE PATENTANMELDUNG

(11) **EP 3 141 622 A1**
(43) Veröffentlichungstag der Anmeldung: **15.03.2017**
(21) Anmeldenummer: 16000811.6
(22) Anmeldetag: 08.04.2016
(51) Int. Cl.: C22B 7/00

(54) **VERFAHREN ZUR BEHANDLUNG VON STOFFLICHEN RÜCKSTÄNDEN**

(30) Priorität: 09.09.2015 DE 102015011804
(71) Anmelder: Wieland-Werke AG, 89079 Ulm (DE)
(72) Erfinder: Schillinger, Wolfram, 89077 Ulm (DE); Bubeck, Fabian, 89269 Vöhringen (DE)

(57) **Zusammenfassung**

Die Erfindung betrifft ein Verfahren zur Behandlung von stofflichen Rückständen, welches mindestens folgende Schritte umfasst:
a) Bereitstellen mindestens eines einstückigen, bandförmigen stofflichen Rückstands, welcher als Kombination mindestens zweier Materialien vorliegt und welcher erste und zweite Bereiche aufweist, die hinsichtlich ihrer Verwertbarkeit voneinander unterscheidbar sind,
b) Abtrennen zumindest eines Teils eines ersten Bereichs von dem einstückigen stofflichen Rückstand und
c) Separieren des im Schritt b) abgetrennten Teils eines ersten Bereichs. Erfindungsgemäß umfassen der abgetrennte Teil eines ersten Bereichs und ein zweiter Bereich mindestens ein gemeinsames Material. Die Erfindung betrifft ferner die Verwendung einer Vorrichtung zur Durchführung des erfindungsgemäßen Verfahrens.

## Beschreibung

Die Erfindung betrifft ein Verfahren und eine Vorrichtung zur Behandlung von stofflichen Rückständen, die als Kombination von mindestens zwei unterschiedlichen Materialien vorliegen und erste und zweite Bereiche aufweisen, die hinsichtlich ihrer Verwertbarkeit voneinander unterscheidbar sind.

Unter stofflichen Rückständen werden im Rahmen dieser Erfindung Stoffe verstanden, die bei der formgebenden Herstellung von Produkten neben den beabsichtigen Produkten anfallen und nicht unmittelbar für ein weiteres Produkt verwendet werden können. Typische Beispiele hierfür sind Stanzabfälle oder Späne, die bei Zerspanen eines Werkstoffs entstehen. Um Primärrohstoffe zu schonen, ist man bestrebt, stoffliche Rückstände aufzuarbeiten und dann als Sekundärrohstoffe weitgehend wieder zu verwerten. Häufig besteht ein stofflicher Rückstand aus mehreren unterschiedlichen Materialien. Die Verwertbarkeit eines solchen stofflichen Rückstands hängt wesentlich davon ab, wie sortenrein die einzelnen Materialien des stofflichen Rückstands voneinander getrennt werden können. Im Idealfall erfolgt die stoffliche Trennung exakt sortenrein. Dieser Idealfall kann in vielen Fällen jedoch nur mit großem Aufwand erreicht werden.

Bei metallischen Rohstoffen ist der Wertstoffkreislauf seit langem gut etabliert. So fallen beim Stanzbiegen von Bauteilen, beispielsweise von Steckverbindern, aus Bändern aus Kupferwerkstoffen typischerweise ungefähr 50 bis 60 % des eingesetzten Bands als Stanzschrott an. Liegen diese Stanzschrotte sortenrein vor, werden sie wieder eingeschmolzen und zu neuen Bändern verarbeitet. Bei beschichteten Bändern, beispielsweise Kupferbändern, die mit Zinn oder Silber beschichtet sind, können die Stanzschrotte meist nicht zu neuen Bändern umgearbeitet werden, da das Beschichtungsmaterial nicht in der Legierungszusammensetzung des Grundmaterials vorkommen darf. Derart "verunreinigte" Schrotte müssen meist verhüttet werden. Es entstehen Verhüttungskosten und durch den Verlust der Legierungs- und Beschichtungselemente tritt ein erheblicher Metallwertverlust auf. Das gleiche Problem tritt auch bei der Verarbeitung von partiell beschichteten oder partiell plattierten Bändern auf. Partielle Beschichtungen können beispielsweise aus Zinn, Gold oder Silber bestehen. Partielle Plattierungen können beispielsweise aus walzplattierten Streifen aus Aluminium bestehen. Im Unterscheid zu vollflächigen Beschichtungen oder Plattierungen weist der Stanzschrott bei partiellen Beschichtungen beziehungsweise partiellen Plattierungen erste und zweite Bereiche auf, die sich hinsichtlich ihrer Verwertbarkeit unterscheiden.

Aus der Druckschrift DE 3737003 A1 sind ein Verfahren und eine Vorrichtung zum Besäumen der Längskanten von laufendem Walzband bekannt. Bei dem Verfahren beziehungsweise mit der Vorrichtung werden parallel zur Laufrichtung des Walzbandes beidseitig in Randzonen gewisser Breite Saumstreifen abgetrennt. Diese werden dann unter Bildung von Schrottstücken abtransportiert. Das Verfahren und die Vorrichtung beziehen sich auf die Herstellung von sortenreinem Halbzeug, nicht jedoch auf die Behandlung von stofflichen Rückständen, die aus einem Verbund unterschiedlicher Materialien bestehen.

Ferner sind Verfahren und Vorrichtungen bekannt, mit welchen stoffliche Rückstände, die aus einem Verbund unterschiedlicher Materialien bestehen, zerkleinert werden. Die zerkleinerten Stücke werden dann einem separaten Trennprozess zugeführt. Das Zerkleinern des stofflichen Rückstands erfolgt jedoch unabhängig von dessen Beschaffenheit.

Der Erfindung liegt die Aufgabe zugrunde, ein verbessertes Verfahren zur Behandlung von stofflichen Rückständen, welche als Kombination mindestens zweier Materialien vorliegen und erste und zweite Bereiche aufweisen, die hinsichtlich ihrer Verwertbarkeit voneinander unterscheidbar sind, sowie eine Vorrichtung zur Durchführung eines solchen Verfahrens anzugeben.

Die Erfindung wird bezüglich eines Verfahrens durch die Merkmale des Anspruchs 1 sowie die Merkmale des Anspruchs 7 und bezüglich der Verwendung einer Vorrichtung durch die Merkmale des Anspruchs 8 wiedergegeben. Die rückbezogenen Ansprüche betreffen vorteilhafte Aus- und Weiterbildungen der Erfindung.

Die Erfindung schließt ein Verfahren zur Behandlung von stofflichen Rückständen ein, welches mindestens folgende Schritte umfasst:
a) Bereitstellen mindestens eines einstückigen, bandförmigen stofflichen Rückstands, welcher als Kombination mindestens zweier Materialien vorliegt und welcher erste und zweite Bereiche aufweist, die hinsichtlich ihrer Verwertbarkeit voneinander unterscheidbar sind,
b) Abtrennen zumindest eines Teils eines ersten Bereichs von dem einstückigen stofflichen Rückstand und
c) Separieren des im Schritt b) abgetrennten Teils eines ersten Bereichs. Erfindungsgemäß umfassen der abgetrennte Teil eines ersten Bereichs und ein zweiter Bereich mindestens ein gemeinsames Material.

Die Erfindung bezieht sich auf ein Verfahren zur Behandlung eines einstückigen, bandförmigen stofflichen Rückstands, welcher nicht als sortenreines Material, sondern als Kombination mindestens zweier Materialien vorliegt. Als Materialien im Sinne dieser Erfindung sollen Reinstoffe, wie beispielsweise chemische Elemente oder Verbindungen, sowie homogene Stoffgemische, wie beispielsweise Legierungen, verstanden werden. Ferner weist der stoffliche Rückstand erste und zweite Bereiche auf, die sich hinsichtlich ihrer Verwertbarkeit dergestalt unterscheiden, dass ein erster Bereich besser verwertbar, insbesondere besser recycelbar, als ein zweiter Bereich ist. Eine solche Situation kann beispielsweise vorliegen, wenn die Materialien im stofflichen Rückstand inhomogen verteilt sind oder wenn die Materialien in den ersten Bereichen weniger stark miteinander verbunden sind als in den zweiten Bereichen. Ebenso ist es möglich, dass Unterschiede in Form oder Abmessung zu einer unterschiedlichen Verwertbarkeit der ersten und zweiten Bereiche führen.

Die Erfindung geht nun von der Überlegung aus, den stofflichen Rückstand durch einfache Verfahrensschritte derart in Fraktionen zu zerlegen, dass mindestens eine der so erhaltenen Fraktionen besser verwertbar, insbesondere besser recycelbar, ist als der ursprüngliche stoffliche Rückstand. Hierzu wird zumindest ein Teil eines ersten Bereichs des einstückigen stofflichen Rückstands von diesem abgetrennt und separiert. Mit anderen Worten, vom stofflichen Rückstand wird ein erster Bereich als Ganzes oder nur ein Teil eines ersten Bereichs abgetrennt. Der dabei vom stofflichen Rückstand verbleibende Rest umfasst zweite Bereiche. Erfindungsgemäß erfolgt die Abtrennung so, dass der abgetrennte Teil eines ersten Bereichs und ein zweiter Bereich mindestens ein gemeinsames Material umfassen. Es wird also bewusst in Kauf genommen, dass von mindestens einem im stofflichen Rückstand vorhandenen Material nur eine Teilmenge in eine erste Fraktion, die besser als der ursprüngliche stoffliche Rückstand verwertbar ist, überführt wird, während eine andere Teilmenge dieses Materials einer zweiten Fraktion zugeführt wird, die schlechter verwertbar als die erste Fraktion ist. Bevorzugt können der abgetrennte Teil eines ersten Bereichs und ein zweiter Bereich genau ein gemeinsames Material aufweisen.

Der Vorteil des erfinderischen Verfahrens besteht darin, dass der stoffliche Rückstand durch einfache Verfahrensschritte in Fraktionen zerlegt wird, die zusammen einen höheren Wert darstellen als der ursprünglich vorhandene stoffliche Rückstand. Die Wertsteigerung ist dabei im Allgemeinen größer als der Aufwand für die zusätzlichen Verfahrensschritte. Gleichzeitig verzichtet man bewusst auf eine möglichst sortenreine Trennung der unterschiedlichen Materialien, da eine sortenreine Trennung meist einen hohen Aufwand erfordert. Das erfinderische Verfahren stellt damit eine Möglichkeit zur Verfügung, ein wirtschaftliches Optimum zwischen den beiden Extremfällen der vollständig sortenreinen Trennung und dem vollständigen Entsorgen des stofflichen Rückstands zu realisieren.

Die Gewinnung von metallischen Sekundärrohstoffen ist wirtschaftlich besonders attraktiv. Deshalb kann das erfinderische Verfahren vorteilhafterweise zur Behandlung eines stofflichen Rückstands, der mindestens ein metallisches Material umfasst, eingesetzt werden. Besonders bevorzugt kann der stoffliche Rückstand als Kombination mindestens zweier metallischer Materialien vorliegen. Insbesondere kann der bandförmige stoffliche Rückstand metallischer Stanzschrott sein.

In bevorzugter Ausgestaltung der Erfindung können sich erste und zweite Bereiche in ihrer integralen stofflichen Zusammensetzung unterscheiden. Insbesondere kann das erste Material in ersten Bereichen in einem höheren Anteil vorhanden sein als in zweiten Bereichen. So kann ein erster Bereich eine Zusammensetzung aufweisen, die durch mindestens 75 Gew.-%, bevorzugt mindestens 90 Gew.-%, besonders bevorzugt mindestens 99 Gew.-% eines ersten Materials gekennzeichnet ist, während ein zweiter Bereich eine Zusammensetzung aufweisen kann, die durch einen geringeren Anteil des ersten Materials als in einem ersten Bereich gekennzeichnet ist. Dabei hat das erste Material im zweiten Bereich einen von Null verschiedenen Anteil. Erste und zweite Bereiche weisen also ein gemeinsames Material auf. Trennt man nun zumindest einen Teil des ersten Bereichs ab, so weist dieser abgetrennte Teil einen höheren Anteil des ersten Materials auf als der gesamte stoffliche Rückstand im Durchschnitt. In einem Wertstoffkreislauf, der insbesondere die Rückgewinnung des ersten Materials zum Ziel hat, kann dieser abgetrennte Teil des ersten Bereichs also besonders gut eingesetzt werden.

Bei einer besonders bevorzugten Ausführungsform der Erfindung kann das gemeinsame Material in den ersten Bereichen als sortenreines Material vorliegen und in den zweiten Bereichen mit mindestens einem weiteren Material verbunden sein. Bei einer solchen partiellen Materialkombination liegt in den ersten Bereichen das gemeinsame Material also als Mono-Werkstoff vor, während es in den zweiten Bereichen mit mindestens einem weiteren Werkstoff kraftschlüssig und/oder stoffschlüssig verbunden ist. Eine solche kraft- und stoffschlüssige Verbindung kann beispielsweise erreicht werden, indem ein bandförmiger metallischer Werkstoff streifenförmig und somit partiell mit einem anderen Metall plattiert wird. Da an der Grenzschicht der Metalle intermetallische Diffusion stattfindet, ist es mit einfachen Verfahren nicht möglich, die Metalle im plattierten, zweiten Bereich wieder sortenrein zu trennen. Die Aufarbeitung solcher Bimetall-Schrotte ist deshalb problematisch. Üblicherweise müssen sie verhüttet werden. Da bei partiell plattierten Metallbändern im ersten Bereich eines der Metalle als Mono-Werkstoff vorliegt, kann dieser Bereich gemäß der Erfindung vom zweiten Bereich abgetrennt werden und somit ohne großen Aufwand eine sortenreine und damit gut verwertbare Materialfraktion gewonnen werden. Durch das Abtrennen der ersten Bereiche kann die Menge des stofflichen Rückstands, der als nichtsortenreiner Rückstand zur Verhüttung gegeben werden muss, deutlich verringert werden.

Bei einer weiteren besonders bevorzugten Ausführungsform der Erfindung kann das gemeinsame Material in den ersten Bereichen unbeschichtet und in den zweiten Bereichen mit einem weiteren Material beschichtet sein. Partiell beschichtete Werkstoffe, insbesondere partiell beschichtete Metallbänder, werden in vielen Gebieten der Technik verwendet. Beispiele hierfür sind partiell verzinnte oder versilberte Kupferbänder. Üblicherweise haftet das Beschichtungsmaterial sehr gut auf dem Substrat, so dass es nicht einfach ist, die beiden Materialien im Schrottkreislauf wieder sortenrein zu trennen. Bei partiell beschichteten, bandförmigen Substraten kann der unbeschichtete, blanke Bereich vom beschichteten Bereich gemäß der Erfindung einfach abgetrennt werden und somit ohne großen Aufwand eine sortenreine und damit gut verwertbare Werkstofffraktion gewonnen werden.

In manchen Fällen werden metallische Substrate partiell mit Edelmetall beschichtet. Fallen derartige Stoffkombinationen als stofflicher Rückstand an, dann hat das erfinderische Verfahren einen zweifachen Vorteil: Erstens wird durch das Abtrennen der unbeschichteten Bereiche das Substratmaterial zum großen Teil sortenrein wiedergewonnen, und zweitens wird gleichzeitig in den verbleibenden beschichteten Bereichen der Anteil des Edelmetalls angereichert, was dessen Wiedergewinnung attraktiver macht.

Vorteilhafterweise kann das Abtrennen im Verfahrensschritt b) durch einen mechanischen Trennprozess erfolgen. Besonders günstig sind hierbei spanlose Trennprozesse. Bei bandförmigen stofflichen Rückständen eignen sich hierfür insbesondere Prozesse wie beispielsweise Stanzen, Schneiden oder Kerbverfahren mit anschließendem Abreißen. Solche mechanischen Trennprozesse erfordern nur einen geringen apparativen Aufwand und einen sehr geringen Energieeinsatz.

Bei einer vorteilhaften Ausführungsform der Erfindung kann sich das Verfahren zur Behandlung eines stofflichen Rückstands unmittelbar an einen Prozess zur Herstellung eines Produkts anschließen, wobei der bandförmige stoffliche Rückstand als Nebenprodukt aus diesem Prozess entsteht. Hierbei wird aus einem bandförmigen Ausgangswerkstoff, welcher mindestens zwei Materialien umfasst, durch einen Trennprozess zunächst ein Produkt gewonnen. Der vom Ausgangswerkstoff dabei verbleibende Rest stellt den bandförmigen stofflichen Rückstand dar, der in einer unmittelbar folgenden, weiteren Prozessstufe mittels des erfinderischen Verfahrens weiterverarbeitet wird. Der besondere Vorteil hierbei ist, dass aufgrund der engen Verkettung des Produktherstellungsprozesses mit dem Verfahren zur Behandlung des stofflichen Rückstands dieser durch den vorangehenden Prozess quasi ohne Mehraufwand bereitgestellt wird. Er liegt also zur weiteren Behandlung bereits in geeigneter Weise vor und muss nicht mehr erneut aufgenommen und positioniert werden.

Ein weiterer Aspekt der Erfindung schließt ein Verfahren zur Herstellung eines Produkts und zur gleichzeitigen Behandlung von stofflichen Rückständen ein, wobei das Verfahren mindestens folgende Schritte umfasst:
a) Bereitstellen mindestens eines einstückigen Ausgangswerkstoffs, welcher als Kombination mindestens zweier Materialien vorliegt und welcher voneinander unterscheidbare erste und zweite Bereiche aufweist,
b) Gewinnung des Produkts aus dem Ausgangswerkstoffs durch einen Trennschritt, wobei aus dem Ausgangswerkstoff zusätzlich zum Produkt ein stofflicher Rückstand entsteht, der erste und zweite Bereiche aufweist, die hinsichtlich ihrer Verwertbarkeit voneinander unterscheidbar sind, und gleichzeitiges Abtrennen zumindest eines Teils eines ersten Bereichs von dem stofflichen Rückstand und
c) Separieren des im Schritt b) gewonnenen Produkts sowie Separieren des im Schritt b) abgetrennten Teils eines ersten Bereichs des stofflichen Rückstands.

Erfindungsgemäß umfassen der abgetrennte Teil eines ersten Bereichs und ein zweiter Bereich mindestens ein gemeinsames Material.

Die Erfindung bezieht sich auf ein Verfahren zur gleichzeitigen Herstellung eines Produkts aus einem einstückigen Ausgangswerkstoff und zur Behandlung eines stofflichen Rückstands. Der Ausgangswerkstoff liegt dabei nicht als sortenreines Material, sondern als Kombination mindestens zweier Materialien vor. Als Materialien im Sinne dieser Erfindung sollen Reinstoffe, wie beispielsweise chemische Elemente oder Verbindungen, sowie homogene Stoffgemische, wie beispielsweise Legierungen, verstanden werden. Der Ausgangswerkstoff weist voneinander unterscheidbare erste und zweite Bereiche auf. Aus dem Ausgangswerkstoff wird durch einen Trennschritt ein Produkt gewonnen, wobei der Ausgangswerkstoff nicht vollständig für das Produkt genutzt wird. Der nicht genutzte Teil des Ausgangswerkstoff stellt einen stofflichen Rückstand dar. Aufgrund der Beschaffenheit des Ausgangswerkstoffs weist der stoffliche Rückstand erste Bereiche und zweite Bereiche auf, die sich hinsichtlich ihrer Verwertbarkeit dergestalt unterscheiden, dass ein erster Bereich besser verwertbar, insbesondere besser recycelbar, als ein zweiter Bereich ist. Eine solche Situation kann beispielsweise vorliegen, wenn die Materialien im Ausgangswerkstoff inhomogen verteilt sind oder wenn die Materialien in den ersten Bereichen weniger stark miteinander verbunden sind als in den zweiten Bereichen. Ebenso ist es möglich, dass Unterschiede in Form oder Abmessung zu einer unterschiedlichen Verwertbarkeit der ersten und zweiten Bereiche führen.

Die Erfindung geht nun von der Überlegung aus, den Trennschritt, der zur Gewinnung des Produkts durchgeführt wird, so zu erweitern, dass mit dem erweiterten Trennschritt nicht nur das Produkt gewonnen wird, sondern gleichzeitig auch der stoffliche Rückstand derart in Fraktionen zerlegt wird, dass mindestens eine der so erhaltenen Fraktionen besser verwertbar, insbesondere besser recycelbar, ist als es der stoffliche Rückstand in seiner Gesamtheit wäre. Hierzu wird zumindest ein Teil eines ersten Bereichs des stofflichen Rückstands abgetrennt und separiert. Der dabei vom stofflichen Rückstand verbleibende Rest umfasst zweite Bereiche des stofflichen Rückstands. Erfindungsgemäß erfolgt die Abtrennung so, dass der abgetrennte Teil eines ersten Bereichs und ein zweiter Bereich mindestens ein gemeinsames Material umfassen. Es wird also bewusst in Kauf genommen, dass von mindestens einem im Ausgangswerkstoff vorhandenen Material nur eine Teilmenge in eine erste Fraktion, die besser verwertbar ist als es der stoffliche Rückstand in seiner Gesamtheit wäre, überführt wird, während eine andere Teilmenge dieses Materials einer zweiten Fraktion zugeführt wird, die schlechter verwertbar als die erste Fraktion ist. Bevorzugt können der abgetrennte Teil eines ersten Bereichs und ein zweiter Bereich genau ein gemeinsames Material aufweisen.

Die Vorteile des erfinderischen Verfahrens umfassen die gleichen Vorteile, die bei dem vorstehend beschriebenen Verfahren, das die Behandlung von stofflichen Rückstanden unabhängig von der Herstellung eines Produkts zum Gegenstand hat, diskutiert sind. Darüber hinaus besteht der besondere Vorteil des kombinierten Verfahrens darin, dass die Behandlung des stofflichen Rückstands in den Prozess der Produktherstellung integriert ist. Dadurch lässt sich der gesamte Prozess sehr kompakt gestalten. Die Zerlegung des stofflichen Rückstands in Fraktionen kann sehr gezielt und damit effizient erfolgen, da der Ausgangswerkstoff zur Gewinnung des Produkts bereits sehr genau positioniert ist. Eine separate Handhabung des Rückstands kann entfallen.

Der für das erfinderische Verfahren verwendete Ausgangswerkstoff ist bevorzugt bandförmig. Bei einem bandförmigem Ausgangswerkstoff wird der Trennschritt in Verfahrensschritt b) bevorzugt als Stanzschritt ausgeführt.

Das erfinderische Verfahren kann vorteilhafterweise zur Behandlung eines stofflichen Rückstands, der mindestens ein metallisches Material umfasst, eingesetzt werden. Besonders bevorzugt kann der stoffliche Rückstand als Kombination mindestens zweier metallischer Materialien vorliegen. Insbesondere kann der stoffliche Rückstand bandförmiger, metallischer Stanzschrott sein.

Bei einer bevorzugten Ausführungsform der Erfindung kann der Ausgangswerkstoff als Werkstoff vorliegen, bei dem ein erstes Material in ersten Bereichen als sortenreines Material vorliegt und in zweiten Bereichen mit mindestens einem weiteren Material verbunden ist.

Bei einer besonders bevorzugten Ausführungsform der Erfindung kann der Ausgangswerkstoff als Werkstoff vorliegen, bei dem ein erstes Material in ersten Bereichen unbeschichtet und in zweiten Bereichen mit einem zweiten Material beschichtet ist.

Ein weiterer Aspekt der Erfindung schließt die Verwendung einer Vorrichtung zur Durchführung eines der vorstehend beschriebenen Verfahren ein, bei welchen ein stofflicher Rückstand, der als Kombination mindestens zweier Materialien vorliegt, erste und zweite Bereiche aufweist, die sich hinsichtlich ihrer Verwertbarkeit dergestalt unterscheiden, dass ein erster Bereich besser verwertbar als ein zweiter Bereich ist. Dabei weist die Vorrichtung ein Werkzeug auf, mit dem zumindest ein Teil eines ersten Bereichs von dem stofflichen Rückstand abgetrennt werden kann, wobei der abgetrennte Teil eines ersten Bereichs und ein zweiter Bereich des stofflichen Rückstands mindestens ein gemeinsames Material umfassen. Ferner kann der abgetrennte Teil eines ersten Bereich in der Vorrichtung separiert werden.

Die Erfindung geht von der Überlegung aus, zur Durchführung eines erfindungsgemäßen Verfahrens eine Vorrichtung zu verwenden, mittels derer der stoffliche Rückstand durch vergleichsweise einfache Verfahrensschritte derart in Fraktionen zerlegt werden kann, dass mindestens eine der so erhaltenen Fraktionen besser verwertbar ist als der ursprüngliche stoffliche Rückstand. Hierzu weist die Vorrichtung ein Werkzeug auf, mit dem zumindest ein Teil eines ersten Bereichs von dem stofflichen Rückstand abgetrennt werden kann. Anschließend wird der abgetrennte Teil in der Vorrichtung separiert. Der vom stofflichen Rückstand verbleibende Rest umfasst zweite Bereiche. Erfindungsgemäß erfolgt die Abtrennung so, dass der abgetrennte Teil eines ersten Bereichs und ein zweiter Bereich mindestens ein gemeinsames Material umfassen. Es wird also bewusst in Kauf genommen, dass von mindestens einem im stofflichen Rückstand vorhandenen Material nur eine Teilmenge in eine erste Fraktion, die besser als der ursprüngliche stoffliche Rückstand verwertbar ist, überführt wird, während eine andere Teilmenge dieses Materials einer zweiten Fraktion zugeführt wird, die schlechter verwertbar als die erste Fraktion ist. Bevorzugt können der abgetrennte Teile eines ersten Bereichs und ein zweiter Bereich genau ein gemeinsames Material umfassen.

In vorteilhafter Ausgestaltung der Erfindung kann die Vorrichtung, die zur Durchführung eines erfindungsgemäßen Verfahrens verwendet wird, mit einer weiteren Vorrichtung, die zur Herstellung eines Produkts und zur Bereitstellung eines einstückigen stofflichen Rückstands vorgesehen ist, derart verbunden sein, dass die Behandlung des stofflichen Rückstands unmittelbar im Anschluss an die Herstellung des Produkts durchführbar ist. Durch die Verwendung derartig verketteter Vorrichtungen wird die Handhabung des stofflichen Rückstands vereinfacht. Ferner wird der stoffliche Rückstand unmittelbar nach der Herstellung des Produkts in die für die Verwertung vorgesehenen Fraktionen zerlegt. Der Prozess der Rohstoffwiedergewinnung kann damit beschleunigt werden.

Bei einer alternativen vorteilhaften Ausgestaltung der Erfindung kann bei der Vorrichtung, die zur Durchführung eines erfindungsgemäßen Verfahrens verwendet wird, das Werkzeug in eine Werkzeugeinheit integriert sein, mit der in einem Arbeitsschritt gleichzeitig aus einem Ausgangswerkstoff ein Produkt herstellbar ist und die Behandlung des stofflichen Rückstands durchführbar ist. Der besondere Vorteil der Verwendung einer solchen integrierten Vorrichtung besteht darin, dass die Behandlung des stofflichen Rückstands quasi am gleichen Ort wie die Herstellung des Produkts stattfindet. Dadurch lässt sich die gesamte Vorrichtung sehr kompakt gestalten. Die Zerlegung des stofflichen Rückstands in Fraktionen kann sehr gezielt und effizient erfolgen, da der Ausgangswerkstoff zur Gewinnung des Produkts bereits sehr genau in der Vorrichtung positioniert ist. Separate Vorrichtungen oder Werkzeuge zur Handhabung des stofflichen Rückstands können bei dieser Ausgestaltung der Erfindung entfallen.

Ausführungsbeispiele der Erfindung werden anhand der schematischen Zeichnungen näher erläutert.

Darin zeigen:
- Fig. 1: einen bandförmigen Ausgangswerkstoff,
- Fig. 2: einen bandförmigen stofflichen Rückstand,
- Fig. 3: zwei Fraktionen, die aus der Zerlegung einen bandförmigen stofflichen Rückstands resultieren,
- Fig. 4: eine Vorrichtung zur Durchführung eines erfindungsgemäßen Verfahrens in der Draufsicht, und
- Fig. 5: eine alternative Vorrichtung zur Durchführung eines erfindungsgemäßen Verfahrens in der Draufsicht.

Einander entsprechende Teile sind in allen Figuren mit denselben Bezugszeichen versehen.

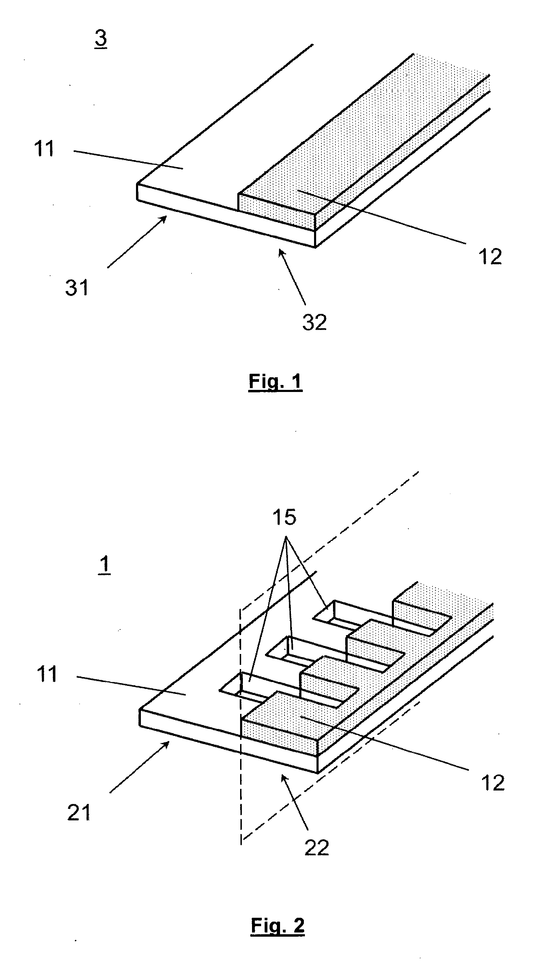

Fig. 1 zeigt einen bandförmigen Ausgangswerkstoff 3 beliebiger Länge. Der Ausgangswerkstoff 3 besteht aus einem bandförmigen ersten Material 11, das partiell mit einem zweiten Material 12 verbunden ist. Im vorliegenden Beispiel ist das erste Material eine Kupferlegierung und das zweite Material eine Aluminiumlegierung. In dem in Fig. 1 dargestellten Ausführungsbeispiel ist das zweite Material 12 als Streifen, der ungefähr halb so breit ist wie das bandförmige erste Material 11, auf dem ersten Material 11 aufgebracht. Der Ausgangswerkstoff 3 weist somit einen ersten Bereich 31 und einen zweiten Bereich 32 auf. Im ersten. Bereich 31 liegt das erste Material 11 sortenrein vor. Im zweiten Bereich 32 sind das erste Material 11 und das zweite Material 12 durch Walzplattieren kraft- und stoffschlüssig miteinander verbunden.

Fig. 2 zeigt einen bandförmigen stofflichen Rückstand 1. Dieser ist aus einem Ausgangswerkstoff 3 gemäß Fig. 1 entstanden, indem aus dem Ausgangswerksstoff 3 mittels eines Trennschritts Produkte herausgetrennt wurden, so dass Aussparungen 15 verbleiben. In Fig. 2 sind exemplarisch drei Aussparungen 15 dargestellt. Wie der Ausgangswerkstoff 3 besteht der stoffliche Rückstand 1 aus einer Kupferlegierung als erstem Material 11 und einer Aluminiumlegierung als zweitem Material 12. Das Heraustrennen der Produkte erfolgt üblicherweise durch einen Stanzschritt, so dass Fig. 2 einen stofflichen Rückstand 1 in Form von Stanzabfall darstellt. Analog zum Ausgangswerkstoff 3 weist der stoffliche Rückstand 1 einen ersten Bereich 21 und einen zweiten Bereich 22 auf. Die Grenzfläche zwischen dem ersten Bereich 21 und dem zweiten Bereich 22 ist durch eine senkrechte Fläche angedeutet, die mit gestrichelten Begrenzungslinien dargestellt ist. Im ersten Bereich 21 besteht der stoffliche Rückstand 1 lediglich aus dem ersten Material 11, während im zweiten Bereich 22 eine Kombination aus erstem Material 11 und zweitem Material 12 vorliegt. Der erste Bereich 21 des stofflichen Rückstands 1 für sich allein betrachtet ist somit besser verwertbar als der zweite Bereich 22.

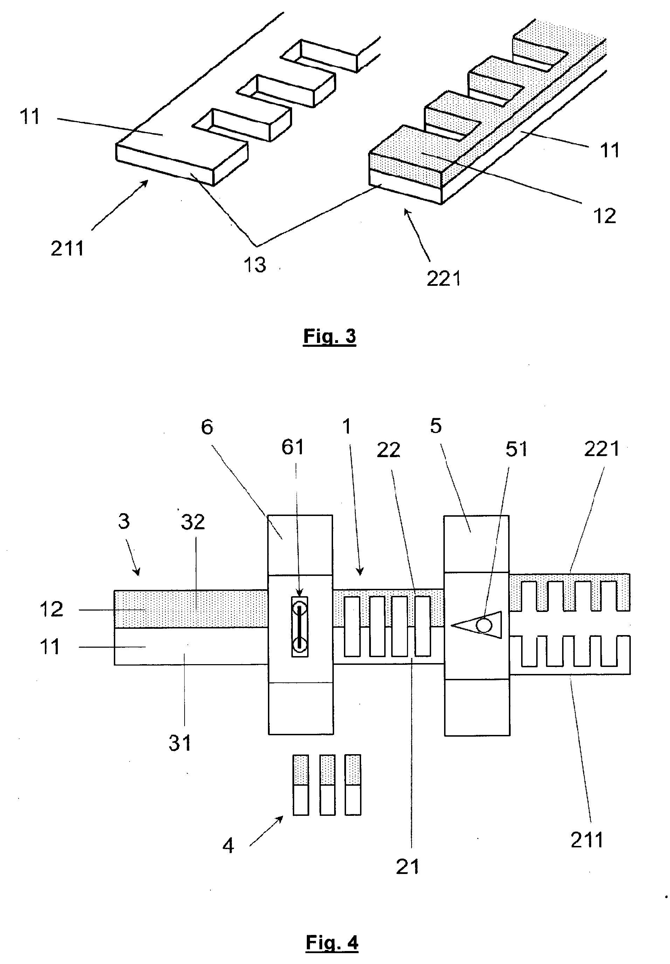

Fig. 3 zeigt die aus dem stofflichen Rückstand 1 gemäß Fig. 2 gebildeten Fraktionen nach Anwendung des erfinderischen Verfahrens. Der stoffliche Rückstand 1 wurde entlang der in Fig. 2 angedeuteten Grenzfläche in zwei Teile 211 und 221 zertrennt und separiert. Im dargestellten Fall erfolgte die Trennung so, dass der abgetrennte Teil 211 genau dem ersten Bereich 21 des stofflichen Rückstands 1 entspricht. Damit entspricht der als Rest verbleibende andere Teil 221 genau dem zweiten Teil 22 des stofflichen Rückstands 1. Es ist jedoch auch möglich, nur einen Teil 211 des ersten Bereichs 21 abzutrennen. In beiden Fällen besteht der abgetrennte Teil 211 nur aus dem ersten Material 11 und ist damit gut verwertbar, während der verbleibende Rest 221 als Verbund von erstem Material 11 und zweitem Material 12 vorliegt und somit weniger gut verwertbar ist. Darüber hinaus weisen beide Teile ein gemeinsames Material 13 auf, nämlich das erste Material 11. Das erste Material 11 wird also nicht in seiner Gesamtheit vom zweiten Material 12 getrennt.

Fig. 4 zeigt eine Draufsicht einer Vorrichtung 5, die mit einer weiteren Vorrichtung 6 zur Herstellung von Produkten 4 gekoppelt^{.}ist. Die Bearbeitungsrichtung ist von links nach rechts. Der bandförmige Ausgangswerkstoff 3 gemäß Fig. 1 setzt sich aus einem ersten Material 11 und einem zweiten Material 12 zusammen und weist erste Bereiche 31 und zweite Bereiche 32 auf. Da Fig. 4 eine Draufsicht auf den Ausgangswerkstoff 3 zeigt, ist in Fig. 4 nicht zu erkennen, dass im zweiten Bereich 32 das erste Material 11 und das zweite Material 12 miteinander verbunden sind, während im ersten Bereich 31 das erste Material 11 blank vorliegt. Der bandförmige Ausgangswerkstoff 3 wird einer bezogen auf die Bearbeitungsrichtung ersten Vorrichtung 6 zugeführt. In dieser Vorrichtung 6 stanzt ein Werkzeug 61 Produkte 4 aus dem Ausgangswerkstoff 3. Der Stanzabfall 1 verlässt die Vorrichtung 6 als einstückiger, bandförmiger stofflicher Rückstand 1 und er wird unmittelbar danach einer bezogen auf die Bearbeitungsrichtung zweiten Vorrichtung 5 zugeführt. Der stoffliche Rückstand 1 entspricht dabei der Darstellung der Fig. 2. In dieser Vorrichtung 5 trennt ein Werkzeug 51 den Stanzabfall 1 in zwei Teile 211 und 221, deren Zusammensetzung der Darstellung in Fig. 3 entspricht. Die Vorrichtungen 5 und 6 sind in einer Linie angeordnet und miteinander durch den Prozessablauf verkettet. Der Stanzabfall 1 bewegt sich mit der gleichen Geschwindigkeit in Bearbeitungsrichtung wie der Ausgangswerkstoff 3 und er muss vor der Vorrichtung 5 nicht erneut aufgenommen werden. Der räumliche Abstand zwischen den beiden Vorrichtungen 5 und 6 ist ohne nähere Bedeutung.

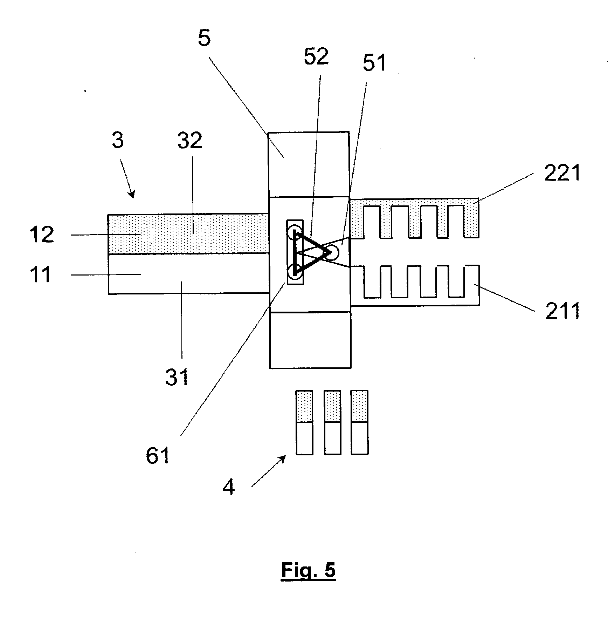

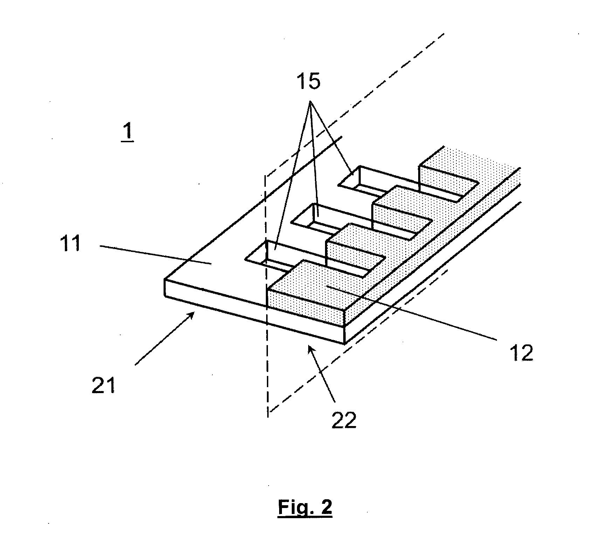

Fig. 5 zeigt eine Draufsicht einer Vorrichtung 5, mit der in einem Arbeitsschritt Produkte 4 hergestellt und gleichzeitig ein anfallender Stanzabfall behandelt werden können. Die Bearbeitungsrichtung ist von links nach rechts. Der bandförmige Ausgangswerkstoff 3 gemäß Fig. 1 wird der Vorrichtung 5 zugeführt. In der Vorrichtung 5 sind ein Stanzwerkzeug 61 und ein Werkzeug 51 zur Behandlung des Stanzabfalls in einer Werkzeugeinheit 52 zusammengefasst. Durch das Stanzwerkzeug 61 werden aus dem Ausgangswerkstoff 3 Produkte 4 ausgestanzt. Die Zerlegung des Stanzabfalls in einen sortenreinen Teil 211 und einen nicht-sortenreinen Rest 221 erfolgt durch das Werkzeug 51 gleichzeitig mit dem Ausstanzen der Produkte 4. Insofern tritt ein einstückiger, stofflicher Rückstand, der als Kombination mindestens zweier Materialien 11 und 12 vorliegt und der erste Bereiche 21 und zweite Bereiche 22 aufweist, die hinsichtlich ihrer Verwertbarkeit voneinander unterscheidbar sind, bei dieser Ausführungsform der Erfindung nicht explizit auf.

### Bezugszeichenliste

- 1: stofflicher Rückstand
- 11: erstes Material
- 12: zweites Material
- 13: gemeinsames Material
- 15: Aussparungen
- 21: erster Bereich
- 211: Teil des ersten Bereichs
- 22: zweiter Bereich
- 221: Rest
- 3: Ausgangswerkstoff
- 31: erster Bereich
- 32: zweiter Bereich
- 4: Produkt
- 5: Vorrichtung
- 51: Werkzeug
- 52: Werkzeugeinheit
- 6: weitere Vorrichtung
- 61: Werkzeug, Stanzwerkzeug

## Patentansprüche

1. Verfahren zur Behandlung von stofflichen Rückständen, welches mindestens folgende Schritte umfasst:
a) Bereitstellen mindestens eines einstückigen, bandförmigen stofflichen Rückstands (1), welcher als Kombination mindestens zweier Materialien (11, 12) vorliegt und welcher erste (21) und zweite (22) Bereiche aufweist, die hinsichtlich ihrer Verwertbarkeit voneinander unterscheidbar sind,
b) Abtrennen zumindest eines Teils (211) eines ersten Bereichs (21) von dem einstückigen stofflichen Rückstand (1) und
c) Separieren des im Schritt b) abgetrennten Teils (211) eines ersten Bereichs (21),
**dadurch gekennzeichnet,**
**dass** der abgetrennte Teil (211) eines ersten Bereichs (21) und ein zweiter Bereich (22) mindestens ein gemeinsames Material (13) umfassen.

2. Verfahren nach Anspruch 1, **dadurch gekennzeichnet, dass** sich erste (21) und zweite (22) Bereiche in ihrer integralen stofflichen Zusammensetzung unterscheiden.

3. Verfahren nach Anspruch 2, **dadurch gekennzeichnet, dass** das gemeinsame Material (13) in ersten Bereichen (21) als sortenreines Material vorliegt und in zweiten Bereichen (22) mit mindestens einem weiteren Material (12) verbunden ist.

4. Verfahren nach Anspruch 2 oder 3, **dadurch gekennzeichnet, dass** das gemeinsame Material (13) in ersten Bereichen (21) unbeschichtet und in zweiten Bereichen (22) beschichtet ist.

5. Verfahren nach einem der Ansprüche 1 bis 4, **dadurch gekennzeichnet, dass** das Abtrennen im Verfahrensschritt b) durch einen mechanischen Trennprozess erfolgt.

6. Verfahren nach einem der Ansprüche 1 bis 5, **dadurch gekennzeichnet, dass** es sich unmittelbar an einen Prozess zur Herstellung eines Produkts (4) anschließt, wobei der stoffliche Rückstand (1) als Nebenprodukt aus diesem Prozess entsteht.

7. Verfahren zur Herstellung eines Produkts (4) und zur Behandlung von stofflichen Rückständen (1), wobei das Verfahren mindestens folgende Schritte umfasst:
a) Bereitstellen mindestens eines einstückigen Ausgangswerkstoffs (3), welcher als Kombination mindestens zweier Materialien (11, 12) vorliegt und welcher voneinander unterscheidbare erste (31) und zweite (32) Bereiche aufweist,
b) Gewinnung des Produkts (4) aus dem Ausgangswerkstoff (3) durch einen Trennschritt, wobei aus dem Ausgangswerkstoff (3) zusätzlich zum Produkt (4) ein stofflicher Rückstand (1) entsteht, der erste (21) und zweite (22) Bereiche aufweist, die hinsichtlich ihrer Verwertbarkeit voneinander unterscheidbar sind, und gleichzeitiges Abtrennen zumindest eines Teils (211) eines ersten Bereichs (21) von dem stofflichen Rückstand (1) und
c) Separieren des im Schritt b) gewonnenen Produkts (4) sowie Separieren des im Schritt b) abgetrennten Teils (211) eines ersten Bereichs (21) des stofflichen Rückstands (1),
**dadurch gekennzeichnet,**
**dass** der abgetrennte Teil (211) eines ersten Bereichs (21) und ein zweiter Bereich (22) mindestens ein gemeinsames Material (13) umfassen.

8. Verwendung einer Vorrichtung (5) zur Durchführung des Verfahrens nach einem der Ansprüche 1 bis 7, wobei der stoffliche Rückstand (1), der als Kombination mindestens zweier Materialien (11, 12) vorliegt, erste (21) und zweite (22) Bereiche aufweist, die hinsichtlich ihrer Verwertbarkeit voneinander unterscheidbar sind,
wobei die Vorrichtung (5) ein Werkzeug (51) aufweist, mit dem zumindest ein Teil (211) eines ersten Bereichs (21) von dem stofflichen Rückstand (1) abgetrennt werden kann, wobei der abgetrennte Teil (211) eines ersten Bereichs (21) und ein zweiter Bereich (22) des stofflichen Rückstands (1) mindestens ein gemeinsames Material (13) umfassen, und wobei der abgetrennte Teil (211) eines ersten Bereich (21) in der Vorrichtung (5) separierbar ist.

9. Verwendung einer Vorrichtung (5) gemäß Anspruch 8, **dadurch gekennzeichnet,**
**dass** die Vorrichtung (5) mit einer weiteren Vorrichtung (6), die zur Herstellung eines Produkts (4) und zur Bereitstellung eines einstückigen stofflichen Rückstands (1) vorgesehen ist, derart verbunden ist, dass die Behandlung des stofflichen Rückstands (1) unmittelbar im Anschluss an die Herstellung des Produkts (4) durchführbar ist.

10. Verwendung einer Vorrichtung (5) gemäß Anspruch 8 zur Durchführung des Verfahrens nach Anspruch 7, **dadurch gekennzeichnet,**
**dass** das Werkzeug (51) in eine Werkzeugeinheit (52) integriert ist, mit der in einem Arbeitsschritt gleichzeitig aus dem Ausgangswerkstoff (3) ein Produkt (4) herstellbar ist und die Behandlung des stofflichen Rückstands (1) durchführbar ist.
